Europäisches Patentamt

European Patent Office

Office européen des brevets

(11) Veröffentlichungsnummer: **0 355 621 B1**

# EUROPÄISCHE PATENTSCHRIFT

(45) Veröffentlichungstag der Patentschrift: **16.06.93**

(21) Anmeldenummer: **89114890.0**

(22) Anmeldetag: **11.08.89**

(51) Int. Cl.⁵: **B29C 59/12**, B05D 3/14

(54) Flächengebilde aus einem Substrat und einem Überzug und Verfahren zu seiner Herstellung.

(30) Priorität: **16.08.88 DE 3827630**

(43) Veröffentlichungstag der Anmeldung:
**28.02.90 Patentblatt 90/09**

(45) Bekanntmachung des Hinweises auf die
Patenterteilung:
**16.06.93 Patentblatt 93/24**

(84) Benannte Vertragsstaaten:
**BE DE FR GB IT LU NL SE**

(56) Entgegenhaltungen:
EP-A- 0 133 832    EP-A- 0 160 889
EP-A- 0 223 998    EP-A- 0 279 371
DE-A- 1 494 151    FR-A- 2 201 491
FR-A- 2 578 176    GB-A- 1 526 918
US-A- 3 274 089

(73) Patentinhaber: **HOECHST AKTIENGESELL-
SCHAFT
Postfach 80 03 20
W-6230 Frankfurt am Main 80(DE)**

(72) Erfinder: **Gribbin, John Derek, Dr.
Birkenweg 16
W-6229 Schlangenbad 2(DE)**
Erfinder: **Bothe, Lothar, Dr.
Am Heiligenhaus 9
W-6500 Mainz(DE)**
Erfinder: **Dinter, Peter, Dipl.-Ing.
Am Wiesenberg 4
W-6227 Hallgarten(DE)**

**Beschreibung**

Die vorliegende Erfindung betrifft ein Flächengebilde aus einem Substrat und einem Überzug auf zumindest einer Oberfläche des Substrats, wobei der Überzug aus einer Haftvermittelschicht besteht, die mit Hilfe einer elektrischen Koronaentladung gebildet ist, die zwischen einer spannungsführenden und einer Gegenelektrode abläuft, und ein Verfahren zu seiner Herstellung.

Bei flächigen Formkörpern aus polymeren Werkstoffen, wie z.B. Folien und Platten, deren Oberflächen im allgemeinen nicht hydrophil sind, führen unzureichende Hafteigenschaften bei der Weiterverarbeitung derselben durch Beschichten oder Bedrucken zu unerwünschten Problemen. Darunter fallen das teilweise Lösen der Beschichtung von dem Flächengebilde und die schlechte Bedruckbarkeit der Flächengebilde.

Orientierte Folien aus Kunststoffen, insbesondere biaxial orientierte Folien aus Polyethylenterephthalat, werden in großem Umfang als Verpackungs- und Etikettierungsmamterial für verschiedenartige Produkte, u.a. auch für Lebensmittel, verwendet.

Da Oberflächen von Folien aus Kunststoff meist hydrophob sind, lassen sie sich nur schwer beschichten oder bedrucken. Für viele Verpackungs- und Etikettierungszwecke sollen die Folien jedoch für normale Flexodruck- und/oder Tiefdruckfarben aufnahmefähig sein.

Um diesem Mangel abzuhelfen, wurden Spezialfarben entwickelt, die unmittelbar auf der Oberfläche von Folien haften. Viele dieser Farben haben allerdings Rezepturen auf der Basis von organischen Lösemitteln, harzartigen Bindemitteln und anderen Bestandteilen, die teuer und schwierig zu verarbeiten sind.

Eine weitere Möglichkeit zur Verbesserung der Bedruckbarkeit von Kunststoffolien besteht darin, daß eine Grundierschicht aufgebracht wird, die sowohl auf der Folie haftet als auch Druckfarben annimmt. Solche Grundierschichten bestehen z.B. aus Polymermassen auf Basis von Vinylidenchlorid-Terpolymerisaten, wie sie in dem US-Patent 2,698,240 beschrieben sind, oder aus in Wasser dispergierbaren Copolyestergrundierungen, wie sie aus der US-PS 4,252,885 bekannt sind.

Es ist bekannt, wäßrige Dispersionen von harzartigen Stoffen mit geringen Mengen an Natriumalkylsulfaten zu versetzen und diese Dispersionen dann als Grundierschichten auf biaxial orientierte Polyesterfolien aufzutragen. Die Sulfate dienen als Emulgatoren oder Netzmittel für die z.B. in dem US-Patent 2,627,088 beschriebenen Verwendungszwecke.

Keine dieser Vorveröffentlichungen befaßt sich jedoch mit dem Problem der Verbesserung der Haftung von Kunststoffolien bzw. mit der Lösung dieses Problems durch die hier beschriebene Verfahrensweise.

Aufgabe der vorliegenden Erfindung ist es, Flächengebilde, wie Folien, Platten, Gewebe und dergleichen, mit Oberflächen zu schaffen, die eine gute Haftung und Aufnahmefähigkeit für Beschichtungen und/oder das Bedrucken aufweisen.

Diese Aufgabe wird erfindungsgemäß dadurch gelöst, daß ein in die Koronaentladungszone eingebrachtes Aerosol, das ein vernetzbares bzw. nicht-vernetzbares Mittel als Haftvermittler in einer Dispersion oder Emulsion enthält, den Überzug auf das Substrat aufbringt und daß der Überzug eine Schichtdicke mit einem Flächengewicht von 1 bis 100 mg/m$^2$ besitzt.

Für das Substrat können im Rahmen der vorliegenden Erfindung prinzipiell alle Materialien verwendet werden, bei denen die eingangs erwähnten Schwierigkeiten bei der Weiterverarbeitung infolge schlecht haftender Oberflächen bestehen, insbesondere Polymere, in Form von Folien, wie biaxial orientierte Polyester- oder Polypropylenfolien, oder Platten.

Beispiele für Polymere sind insbesondere Polymerfolien, z.B. Folien aus natürlichen und synthetischen Polymeren wie Cellulose, Celluloseester, Polyvinylchlorid, Polystyrol, Styrolcopolymere mit Butadien, Polycarbonat, Polymere und Copolymere von Olefinen wie Ethylen, Propylen, Butylen, Methylpenten usw., Polysulfon, aliphatischen und aromatischen Polyestern, Polyimiden, Polyisobutylen, Polymethylmethacrylat, Polyphenylensulfid, Polyurethan, Polyamid, Polyaryletherketon, Polyaryletheretherketon, Polyarylethersulfon, Polyamidimid, Polyetherimid usw. (vgl. Ullmanns Enzyklopädie der technischen Chemie, Verlag Chemie, Weinheim, 4. neubearbeitete und erweiterte Auflage (1976), Seite 673 ff; Encyclopedia of Polymer Science and Eng., Vol. 7, John Wiley & Sons (1973), Seite 73 ff). Die Herstellung von selbsttragenden, orientierten oder nicht-orientierten Folien aus den genannten Polymeren erfolgt nach verschiedenen bekannten Technologien, die in der zitierten Literatur ebenfalls beschrieben sind, wobei unter dem Begriff selbsttragende Folie sowohl Monofolien aus einer Schicht wie auch Mehrschichtfolien aus mehreren Schichten aus gleichen oder verschiedenen Polymermaterialien oder Laminate enthaltende Schichten aus Kunststoffen und aus Nicht-Kunststoffen, wie z.B. Papier oder Metall, zu verstehen sind.

Der haftvermittelnde Überzug auf dem Substrat entsteht durch das Einwirken einer elektrischen Coronaentladung in Anwesenheit eines Aerosols auf die Substratoberfläche. Durch die Coronaentladung werden Reaktionsmechanismen ausgelöst und begünstigt, die eine chemische Oberflächenmodifizierung

2

EP 0 355 621 B1

des behandelten Substrats zur Folge haben. Eine Erklärung hierfür könnte sein, daß durch die Coronaentladung das Aerosol bzw. die darin enthaltenen Mittel auf der Substratoberfläche festhaftend verankert werden. Darüber hinaus wirkt sich die Koronaentladung auf die Vernetzung der im Aerosol enthaltenen Komponenten positiv aus.

Die spannungsführende Elektrode wird für die Coronaentladung von einem Hochspannungsgenerator mit einer Wechselspannung zwischen 5.000 und 25.000 V beaufschlagt. Die zwischen der spannungsführenden Elektrode und der geerdeten Gegenelektrode anliegende Wechselspannung ist dabei proportional zu der Transportgeschwindigkeit, mit der sich das zu behandelnde Substrat durch die Coronaentladungszone bewegt, d.h. bei höherer Transportgeschwindigkeit wird die Wechselspannung im oberen Bereich, bei geringeren Transportgeschwindigkeiten im mittleren Bereich von 5.000 bis 18.000 V eingestellt, um eine gleichbleibende Wirkung, unabhängig von der Transportgeschwindigkeit, zu erzielen.

Die Aufbereitung der Aerosole erfolgt mit Hilfe bekannter Zweistoff-Zerstäuberdüsen oder mittels piezoelektrischer Ultraschall-Zerstäubungssysteme. Die Aerosole werden als Emulsionen, als Dispersionen oder Lösungen nieder- und/oder hochmolekularer Materialien eingesetzt, die in Löse- und Dispersionsmitteln, wie beispielsweise in Wasser, in die Coronaentladungszone eingebracht werden.

Ein Verfahren zur Behandlung der Oberflächen von Kunststoffsubstraten mittels Coronaentladung bei gleichzeitiger Aerosolbesprühung sowie eine Anordnung zur Durchführung dieses Verfahrens ist in allen Einzelheiten in der älteren europäischen Patentanmeldung EP-A-0 279 371 beschrieben.

Beispiele für haftvermittelnde Mittel sind wäßrige Acrylat-, Copolyester-, Polyurethan- oder Polyvinylidenchlorid-Copolymere enthaltende Dispersionen oder solche Dispersionen, die thermoplastische und/oder vernetzbare Komponenten enthalten.

Die aufzubringende Menge an haftbildendem Mittel kann in weiten Grenzen variiert werden und wird auf den jeweils vorliegenden Anwendungsfall abgestimmt.

Nach dem erfindungsgemäßen Verfahren werden die haftbildenden Mittel zunächst in einem Löse- oder Dispersions-mittel dispergiert, emulgiert oder gelöst, wobei bevorzugt ein wäßriges Löse- oder Dispersionsmittel zur Anwendung kommt. Das Löse- und Dispergiermittel mit dem haftbildenden Mittel wird dann zusammen mit einem Trägergas in die Coronaentladungszone als Aerosol gesprüht. Die Dispersionen oder Emulsionen weisen im allgemeinen einen Gehalt an Haftmitteln von 0,1 bis 10 Gew.-% auf, bezogen auf das Gesamtgewicht der Dispersions- bzw. Emulsionsflüssigkeit. Es kann ggf. von Vorteil sein, zur Verbesserung der Dispergier- oder Emulgierbarkeit die Temperatur der Dispergiermittel zu erhöhen.

Als Trägergas für das Aerosol wird im allgemeinen Luft verwendet, es kann aber auch Stickstoff oder ein anderes inertes Gas, z.B. ein Edelgas, eingesetzt werden. Besonders vorteilhafte Verankerungseffekte können mit reaktionsfähigen Gasen wie beispielsweise mit Halogenen, Kohlendioxid, Ammoniak oder Formaldehyd, gegebenenfalls in Mischung mit inerten Gasen, erzielt werden.

Der Überzug kann nach dem erfindungsgemäßen Verfahren nach dem Fertigstellen des Substrats, offline, auf dieses aufgebracht werden, dies gilt insbesondere, wenn Papiere oder plattenförmige Substrate überzogen werden sollen. Der Überzug kann auch während des Herstellungsprozesses des Substrats, inline, aufgebracht werden. Bekanntlich werden z.B. biaxial orientierte Folien aus thermoplastischen Kunststoffen durch Extrudieren einer Schmelze, nachfolgendes biaxiales Streckorientieren und anschliessendes Hitzefixieren hergestellt. Dabei kann der Überzug vor, zwischen oder nach den einzelnen, in Reihenfolge ablaufenden Streckschritten bzw. vor oder nach einem Simultanstreckprozeß aufgebracht werden oder vor oder nach der Hitzefixierung. Im Falle von Geweben kann der Überzug bereits bei der Herstellung der Fasern auf diese aufgebracht werden oder auf das bereits fertiggestellte Gewebe.

Aufgrund des speziellen Auftragverfahrens weist der Überzug eine besonders gute Haftung auf der Substratoberfläche auf. Die Schichtdicke des Überzugs entspricht dabei einem Flächengewicht im Bereich von nur 1 bis 100 mg/m$^2$.

Die erfindungsgemäßen Flächengebilde eignen sich für diejenigen Anwendungsgebiete, bei denen gute Hafteigenschaften erwünscht sind. Dazu gehören zum Beispiel der Einsatz von Verpackungsfolien oder Folien für technische Anwendungen, wie z. B. Klebebänder, Magnetbandfolien, Kondensatordielektrika oder Trägerfolien für reprografische oder fotografische Anwendungen.

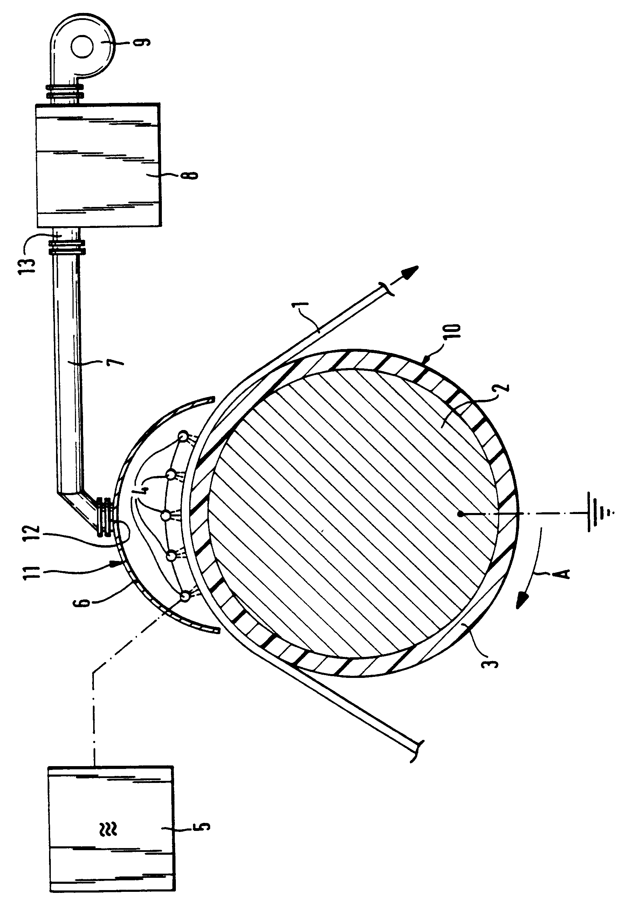

Die Erfindung wird im folgenden unter Bezugnahme auf die einzige Figur näher erläutert, die eine Aerosol-Corona-Vorrichtung zum Behandeln von Polymerfolien zeigt. Die Vorrichtung besteht aus einem Generator 5, der mit einer Coronaentladungseinrichtung 11 verbunden ist. Der Generator 5 legt an Entladungselektroden 4 der Coronaentladungseinrichtung 11 einen hochfrequenten Wechselstrom hoher Spannung an. Als geerdete Gegenelektrode dient der Metallkern 2 einer Walze 10, über deren Umfangsbeschichtung 3 eine zu überziehende, selbsttragende Polymerfolienbahn 1 transportiert wird. Ein Gehäuse 6 umschließt die Entladungselektroden 4 der Coronaentladungseinrichtung 11 und ist über eine Leitung 7, z.B eine Rohr- oder Schlauchleitung, mit einer Zerstäubereinrichtung 8 verbunden, in der eine wäßrige

3

Flüssigkeit zu einem schwebefähigen Aerosol mittels eines piezoelektrisch arbeitenden Ultraschallsystems zerstäubt wird. Ein Gebläse 9 ist an die Zerstäubereinrichtung angeschlossen und befördert das Trägergas, beispielsweise Luft, für das Aerosol durch die Zerstäubereinrichtung hindurch in die Coronaentladungseinrichtung 11. Die Leitung 7 ist mit einem Rohrstutzen 13 der Zerstäubereinrichtung 8 und einem Rohrstutzen 12 des Gehäuses 6 verbunden.

Die Transportgeschwindigkeit der selbsttragenden Polymerfolien beträgt, wenn nicht anders vermerkt, 20 m/min. Die Coronaleistung beträgt jeweils 1.000 W, was einer Spannungseinstellung von 5.500 V entspricht.

Die Hafteigenschaften der Oberfläche werden durch vollflächiges Bedrucken, mit einer Nitrocellulose-Druckfarbe (MRH-23 der Fa. Siegwerk), angetragen nach dem Revers-Gravur-Verfahren, ermittelt. Die bedruckte Oberfläche wird anschließend mit einem gängigen Kaschierkleber beschich-tet und gegen eine 50 $\mu$m Polyethylenfolie kaschiert. Nach dem Aushärten des Klebers nach 10 Tagen bei Raumtemperatur wird die Verbundfestigkeit bestimmt, indem 15 mm breite Streifen aus dem kaschierten Verbund herausgeschnitten werden und die zwei Folien, nämlich das mit Haftmittel ausgerüstete Substrat und die Polyethylenfolie, an einem Zugprüfgerät bei einem Winkel von 180° im Schältest auseinandergezogen werden. Die dazu benötigte Kraft und die Bruchstelle des Verbundes werden jeweils notiert.

Nach fünfminütiger Lagerung in kochendem Wasser, d.h. bei 100 °C, wird die Kochfestigkeit der Verbunde in gleicher Art bestimmt.

Zur Bildung eines Substrates wird ein Polyethylenterephthalatrohstoff aufgeschmolzen, in einer Breitschlitzdüse zu einer Folie geformt und auf einer hochglanzpolierten Abkühlwalze mit einer Oberflächentemperatur von 20 °C zu einer amorphen Vorfolie abgeschreckt. Die Vorfolie wird anschließend bei 95 °C längsgestreckt und bei 110 °C quergestreckt, wobei das Flächenstreckverhältnis etwa 13 beträgt. Die 50 $\mu$m dicke Folie wird anschließend bei 230 °C Rahmentemperatur thermofixiert. Die so hergestellte Folie wird wie folgt behandelt:

## Beispiel 1

Die thermofixierte Folie wird einer Coronabehandlung und einer gleichzeitigen Aerosolbeaufschlagung mit einer wäßrigen Polyvinylidenchlorid(PVdC)-Dispersion (Feststoffgehalt 5 %) (Diofan N610 der Fa. BASF) entsprechend dem erfindungsgemäßen Verfahren ausgesetzt.

## Beispiel 2

Beispiel 1 wird mit einer PVdC-Dispersion mit 8 % Feststoffgehalt wiederholt.

## Beispiel 3

Beispiel 1 wird mit einer Acrylatdispersion, bestehend aus Methylmethacrylat, Ethylacrylat und Methacrylamid, die im Verhältnis 4:1 mit einem Vernetzer auf Basis eines Melaminformaldehyds gemischt sind, wiederholt.

## Beispiel 4

Ausgehend von dem in Beispiel 1 verwendeten Substrat, erfolgt die Coronabehandlung und Aerosolbeaufschlagung mit einer Copolyesterdispersion, wobei der Copolyester aus Isophthalsäure/5-Sulfoisophthalsäure/Alkylenglykol besteht.

## Beispiel 5

Es wird das Substrat des Beispiels 1 einer Coronaentladung und einer Aerosolbeaufschlagung mit einer Dispersion aus Copolyester, bestehend aus Terephthalsäure/5-Sulfonisophthalsäure/Ethylenglykol, unterzogen.

## Vergleichsbeispiel VB 1

Die thermofixierte Folie wird weder einer Coronabehandlung noch einer Aerosolbeaufschlagung unterzogen. Die Verbundfestigkeit beträgt nur 1/6 bis 1/11 des Wertes der mit einem haftvermittelnden Überzug ausgerüsteten PET-Folien.

4

Vergleichsbeispiel VB 2

Die thermofixierte Folie wird einer Coronabehandlung ohne Aerosolbeaufschlagung unterzogen. Die Verbundfestigkeit beträgt etwa den 0,31- bis 0,61-fachen Wert der erfindungsgemäß behandelten Folien.

Vergleichsbeispiel VB 3

Die thermofixierte Folie wird einer Coronabehandlung und einer nachfolgenden Aerosolbeaufschlagung mit der Copolyesterdispersion des Beispiels 4 unterzogen. Die Verbundfestigkeit ist zwar höher als bei den Vergleichsbeispielen 1 und 2, beträgt jedoch nur den 0,6-fachen Wert der Verbundfestigkeit der erfindungsgemäß behandelten Folien.

Alle drei Vergleichsbeispiel VB 1 bis VB 3 haben keine Kochhaftung und delaminieren im Wasser.

Die Meßergebnisse der Verbundfestigkeit und der Kochhaftung der erfindungsgemäßen Beispiele und der Vergleichsbeispiele sind in der nachfolgenden Tabelle zusammengestellt.

TABELLE

| Beispiel Nr. | Verbund-festigkeit N/15 mm | Bruchstelle | Kochhaftung N/15 mm | Bruchstelle |
|---|---|---|---|---|
| 1 | 3,5 | Kohäsionsbruch in der Farbe | 0,2 | zwischen Farbe und PET |
| 2 | 1,8 | zwischen Farbe und PET | 0,2 | zwischen Farbe und PET |
| 3 | 1,8 | Kohäsionsbruch in der Farbe | 0,2 | zwischen Farbe und PET |
| 4 | 2,3 | Kohäsionsbruch in der Farbe | 0,5 | Kohäsionsbruch in der Farbe |
| 5 | 2,4 | Kohäsionsbruch in der Farbe | 0,6 | Kohäsionsbruch in der Farbe |
| VB 1 | 0,3 | zwischen Farbe und PET | 0 (delaminiert in Wasser) | zwischen Farbe und PET |
| VB 2 | 1,1 | zwischen Farbe und PET | 0 (delaminiert in Wasser) | zwischen Farbe und PET |
| VB 3 | 1,4 | Kohäsionsbruch in der Farbe | 0 (delaminiert in Wasser) | zwischen Farbe und PET |

Der Kohäsionsbruch in der Farbe bedeutet, daß die Farbschicht aufgespaltet wird und Farbe sowohl auf der PET- als auch auf der PE-Folie haftet. Befindet sich die Bruchstelle zwischen Farbe und FET-Folie, dann ist die Haftung der Farbschicht auf der PET-Folie nicht ausreichend.

## Patentansprüche

1. Flächengebilde aus einem Substrat und einem Überzug auf zumindest einer Oberfläche des Substrats, wobei der Überzug aus einer Haftvermittlerschicht besteht, die mit Hilfe einer elektrischen Koronaentla-

6

dung gebildet ist, die zwischen einer spannungsführenden und einer Gegenelektrode abläuft, dadurch gekennzeichnet, daß ein in die Koronaentladungszone eingebrachtes Aerosol, das ein vernetzbares bzw. nicht-vernetzbares Mittel als Haftvermittler in einer Dispersion oder Emulsion enthält, den Überzug auf das Substrat aufbringt und daß der Überzug eine Schichtdicke mit einem Flächengewicht von 1 bis 100 mg/m$^2$ besitzt.

2.  Flächengebilde nach Anspruch 1, dadurch gekennzeichnet, daß das Substrat eine Folie aus thermoplastischem Kunststoff, insbesondere eine biaxial orientierte Polyesterfolie oder eine biaxial orientierte Polypropylenfolie ist.

3.  Flächengebilde nach Anspruch 1, dadurch gekennzeichnet, daß das Substrat aus Materialien wie Papier, Platten auf der Basis von geschäumten Polymeren, Ein- oder Mehrschichtfolien auf Polymerbasis, Geweben besteht.

4.  Flächengebilde nach Anspruch 3, dadurch gekennzeichnet, daß das Substrat aus Folien aus natürlichen und synthetischen Polymeren wie Cellulose, Celluloseester, Polyvinylchlorid, Polystyrol, Styrolcopolymere mit Butadien, Polycarbonat, Polymere und Copolymere von Olefinen wie Ethylen, Propylen, Butylen, Methylpenten, Polysulfon, aliphatischen und aromatischen Polyestern, Polyimiden, Polyisobutylen, Polymethylmethacrylat, Polyphenylensulfid, Polyurethan, Polyamid, Polyarylethersulfon, Polyamidimid, Polyetherimid und dgl. besteht.

5.  Flächengebilde nach Anspruch 3, dadurch gekennzeichnet, daß das Substrat aus Kunstfasergeweben auf der Basis von Polyestern, Polyacrylnitril, Polyamiden, Viskose, Mischungen dieser Kunstfasergeweben untereinander oder mit Naturfasern besteht.

6.  Flächengebilde nach einem der Ansprüche 1 bis 5, dadurch gekennzeichnet, daß als haftvermittelnde Mittel wäßrige Acrylat-, Copolyester-, Polyurethan-, Polyvinylidenchlorid-Copolymere enthaltende Dispersionen oder Dispersionen, die thermoplastische und/oder vernetzbare Komponenten enthalten, vorgesehen sind.

7.  Verfahren zum Herstellen eines Flächengebildes nach einem der Ansprüche 1 bis 6, dadurch gekennzeichnet, daß das Substrat durch eine Coronaentladung, die mit einer Wechselspannung zwischen 5.000 und 25.000 V betrieben wird, hindurchläuft und daß ein haftvermittelndes Mittel in einem Dispersionsmittel dispergiert wird und die Dispersion zusammen mit einem Trägergas in die Coronaentladungszone als Aerosol versprüht wird.

8.  Verfahren nach Anspruch 7, dadurch gekennzeichnet, daß die Transportgeschwindigkeit, mit der sich das zu behandelnde Substrat durch die Coronaentladungszone bewegt, proportional zu der Höhe der Wechselspannung ist, mit der die Coronaentladung betrieben wird.

9.  Verfahren nach den Ansprüchen 7 und 8, dadurch gekennzeichnet, daß die Aerosole mit Hilfe von Zweistoff-Zerstäuberdüsen oder piezoelektrischen Ultraschall-Zerstäubungssystemen in die Coronaentladungszone eingebracht werden.

10. Verfahren nach den Ansprüchen 7 bis 9, dadurch gekennzeichnet, daß die Dispersion einen Gehalt an haftvermittelnden Mitteln von 0,1 bis 10 Gew.-% aufweist, bezogen auf das Gesamtgewicht der Dispersion.

11. Verfahren nach Anspruch 7, dadurch gekennzeichnet, daß als Trägergas ein inertes Gas wie Luft, Stickstoff oder Edelgas eingesetzt wird.

12. Verfahren nach Anspruch 7, dadurch gekennzeichnet, daß als Trägergas ein reaktives Gas wie Halogene, Kohlendioxid, Ammoniak oder Formaldehyd oder Mischungen reaktiver Gase mit inerten Gasen eingesetzt werden.

**Claims**

1. A sheet-like structure comprising a substrate and a coating on at least one surface of the substrate, said coating being comprised on an adhesion-promoting layer formed with the aid of a corona discharge taking place between a live electrode and a counter-electrode, wherein the coating is applied to the substrate via an aerosol which is introduced into the corona discharge zone and contains, in the form of a dispersion or emulsion, a cross-linkable or non-crosslinkable agent as an adhesion promoter, and wherein the applied coating has a thickness corresponding to a weight per unit area of 1 to 100 mg/m$^2$.

2. A sheet-like structure as claimed in claim 1, wherein the substrate is a film of a thermoplastic, in particular a biaxially oriented polyester film or a biaxially oriented polypropylene film.

3. A sheet-like structure as claimed in claim 1, wherein the substrate consists of materials such as paper, sheets based on expanded polymers, single-layer or multi-layer films based on polymers, or woven fabrics.

4. A sheet-like structure as claimed in claim 3, wherein the substrate consists of films of natural and synthetic polymers, such as cellulose, cellulose esters, polyvinyl chloride, polystyrene, styrene copolymers with butadiene, polycarbonate, polmyers and copolymers of olefins, such as ethylene, propylene, butylene or methylpentene, polysulfone, aliphatic and aromatic polyesters, polyimides, polyisobutylene, polymethyl methacrylate, polyphenylene sulfide, polyrethane, polyamide, polyaryl ether sulfone, polyamidoimide, polyetherimide and the like.

5. A sheet-like structure as claimed in claim 3, wherein the substrate consists of woven fabrics of man-made fibers which are based on polyesters, polyacrylonitrile, polyamides, viscose or a mixture of these woven fabrics of man-made fibers with one another or with natural fibers.

6. A sheet-like structure as claimed in any of claims 1 to 5, wherein aqueous dispersions containing acrylate, copolyester, polyurethane or polyvinylidene chloride copolymers or dispersions which contain thermoplastic and/or crosslinkable components are provided as adhesion-promoting agents.

7. a process for the production of a sheet-like structure as claimed in any of claims 1 to 6, wherein the substrate passes through a corona discharge, which is operated at an alternating current voltage between 5,000 and 25,000 V, and an adhesion-promoting agent is dispersed in a dispersant and the dispersion is sprayed, together with a carrier gas, into the corona discharge zone as an aerosol.

8. A process as claimed in claim 7, wherein the transport velocity at which the substrate to be treated moves through the corona discharge zone is proportional to the level of the alternating current voltage at which the corona discharge is operated.

9. A process as claimed in claims 7 and 8, wherein the aerosols are introduced into the corona discharge zone with the aid of two-material atomizing nozzles or piezo-electric ultrasonic atomizing systems.

10. A process as claimed in claims 7 to 9, wherein the dispersion contains from 0.1 to 10 % by weight, based on the total weight of the dispersion, of adhesion-promoting agents.

11. A process as claimed in claim 7, wherein an inert gas, such as air, nitrogen or a noble gas, is used as the carrier gas.

12. A process as claimed in claim 7, wherein a reactive gas, such as a halogen, carbon dioxide, ammonia or formaldehyde, or a mixture of reactive gases with inert gases is used as the carrier gas.

**Revendications**

1. Structure plane composée d'un support et d'un revêtement sur au moins une surface du support, le revêtement étant constitué d'une couche d'agent favorisant l'adhérence qui est formée à l'aide d'une décharge électrique en couronne qui se produit entre une électrode sous tension et une contre-électrode, caractérisée en ce qu'un aérosol, introduit dans la zone de décharge en couronne, qui contient un agent réticulable ou non réticulable, en tant qu'agent favorisant l'adhérence, dans une dispersion ou émulsion, applique le revêtement sur le support, et en ce que le revêtement présente une épaisseur de couche correspondant à un poids par unité de surface de 1 à 100 mg/m$^2$.

**2.** Structure plane selon la revendication 1, caractérisée en ce que le support est une pellicule de matière synthétique thermoplastique, en particulier une pellicule de polyester orientée biaxialement ou une pellicule de polypropylène orientée biaxialement.

**3.** Structure plane selon la revendication 1, caractérisée en ce que le support consiste en matériaux tels que le papier, des plaques à base de polymères expansés, des pellicules mono- ou multicouches à base de polymère, des tissus.

**4.** Structure plane selon la revendication 3, caractérisée en ce que le support est constitué de pellicules à base de polymères naturels ou synthétiques, tels que la cellulose, des esters de cellulose, le poly-(chlorure de vinyle), le polystyrène, des copolymères de styrène avec le butadiène, un polycarbonate, des polymères et copolymères d'oléfines telles que l'éthylène, le propylène, le butylène, le méthylpentène, une polysulfone, des polyesters aliphatiques et aromatiques, des polyimides, un polyisobutylène, un poly(méthacrylate de méthyle), un poly(sulfure de phénylène), un polyuréthanne, un polyamide, une polyaryléthersulfone, un polyamide-imide, un polyétherimide, et similaires.

**5.** Structure plane selon la revendication 1, caractérisée en ce que le support est constitué de tissus en fibres synthétiques à base de polyesters, polyacrylonitrile, polyamides, viscose, de mélanges de ces tissus en fibres synthétiques les unes avec les autres ou avec des fibres naturelles.

**6.** Structure plane selon l'une des revendications 1 à 5, caractérisée en ce que, en tant qu'agents favorisant l'adhérence, sont prévus des dispersions aqueuses contenant des copolymères acrylate, copolyester, polyuréthanne, poly(chlorure de vinylidène) ou des dispersions qui contiennent des composants thermoplastiques et/ou réticulables.

**7.** Procédé pour la fabrication d'une structure plane selon l'une des revendications 1 à 6, caractérisé en ce que l'on fait passer le support à travers une décharge en couronne qui est réalisée avec une tension alternative comprise entre 5 000 et 25 000 V, et en ce qu'un agent favorisant l'adhérence est dispersé dans un dispersant, et la dispersion est pulvérisée sous forme d'aérosol, conjointement avec un gaz porteur, dans la zone de décharge en couronne.

**8.** Procédé selon la revendication 7, caractérisé en ce que la vitesse de transport à laquelle le support à traiter se déplace à travers la zone de décharge en couronne est proportionnelle à la valeur de la tension alternative avec laquelle s'effectue la décharge en couronne.

**9.** Procédé selon les revendications 7 et 8, caractérisé en ce que les aérosols sont introduits dans la zone de décharge en couronne à l'aide de buses pour la pulvérisation de deux matériaux ou de systèmes de pulvérisation piezoélectriques à ultrasons.

**10.** Procédé selon les revendications 7 à 9, caractérisé en ce que la dispersion présente une teneur en agents favorisant l'adhérence allant de 0,1 à 10 % en poids, par rapport au poids total de la dispersion.

**11.** Procédé selon la revendication 7, caractérisé en ce que l'on utilise, en tant que gaz porteur, un gaz inerte tel que l'air, l'azote ou un gaz rare.

**12.** Procédé selon la revendication 7, caractérisé en ce que, en tant que gaz porteur, on utilise un gaz réactif tel que des halogènes, le dioxyde de carbone, l'ammoniac ou le formaldéhyde, ou des mélanges de gaz réactifs avec des gaz inertes.